# EUROPÄISCHE PATENTSCHRIFT

(11) **EP 0 873 571 B1**
(45) Veröffentlichungstag und Bekanntmachung des Hinweises auf die Patenterteilung: **22.09.1999**
(21) Anmeldenummer: 96945910.6
(22) Anmeldetag: 27.12.1996
(51) Int. Cl.: H01H 21/34, F16H 59/10

(54) **DREHSCHALTER**
ROTARY SWITCH
COMMUTATEUR ROTATIF

(30) Priorität: 11.01.1996 DE 19600786
(43) Veröffentlichungstag der Anmeldung: 28.10.1998
(73) Patentinhaber: EATON CONTROLS GmbH & Co. KG, 55445 Langenlonsheim (DE)
(72) Erfinder: RUDOLPH, Gerd, D-55499 Aspisheim (DE); LENG, Peter, D-65428 Rüsselsheim (DE); RECH, Dietmar, D-55430 Oberwesel (DE)
(74) Vertreter: Becker, Bernd, Dipl.-Ing.
(86) Internationale Anmeldenummer: DE9602522
(87) Internationale Veröffentlichungsnummer: WO9725731

(56) Entgegenhaltungen:
- EP-A- 0 661 481
- DE-A- 2 411 914
- DE-A- 4 419 794

## Beschreibung

Die Erfindung bezieht sich auf einen Drehschalter mit einem Getriebe, insbesondere Automatikgetriebe, eines Kraftfahrzeuges, der im Innenraum (31) des Getriebes über eine an einem Anschlußkontakte (55) beaufschlagenden Schaltglied (26) angeformte Buchse (25) mit einem umfangsseitigem Wulst (48) sowie einem zugeordneten Befestigungselement (57) auf der Getriebewelle (32) gelagert ist, und der ein an einem aus einem Sokkel (3) und einem Deckel (4) bestehendes Gehäuse (2) angeordnetes Verstellorgan (20) aufweist, das mit einem getriebefesten Rastsystem (40) zusammenwirkt.

Aus der DE 24 11 914 A1 ist ein Drehschalter mit einem drehbaren Kontaktstück und mehreren konzentrisch zu diesem in zwei parallelen Ebenen angeordneten elektrischen Kontakten bekannt, der an der Außenseite eines automatischen Schaltgetriebes eines Kraftfahrzeuges oder im Bereich des Wählhebels befestigt wird. Dort ist der Drehschalter allen äußeren Umwelteinflüssen ausgesetzt. Dabei wirken Temperatur, Schmutz, Schmutzwasser usw. auf ihn ein. Weiterhin ist der Drehschalter an dieser Stelle nicht vor mechanischen Beschädigungen geschützt, die von außen einwirken können. Damit das Innere des Drehschalters vor Umwelteinflüßen geschützt ist, tauchen am Sockel und am Deckel angebrachte Ringfortsätze in am Schaltglied angebrachte Ringnuten ein, wodurch sich ein mäanderförmiges Dichtsystem ergibt. Da mit diesem Dichtsystem gleichzeitig auch die Führung von Sockel, Deckel und Schaltglied bewerkstelligt wird, sind die Anforderungen an die Genauigkeit sehr hoch. Ist das Spiel zu gering, so kommt es zu Verklemmungen bzw. zu großer unerwünschter Reibung. Bei zu großem Spiel kommt es sehr schnell zu Verunreinigungen und somit zur Schaltungsungenauigkeit des Drehschalters. Die Anschlußstecker sind über ein in der Herstellung teueres Schlauchgewinde im Sockel verankert, wofür ein erhöhter Montageaufwand notwendig ist. Alle diese Maßnahmen bedingen eine hohe Fertigungsgenauigkeit, die zu hohen Fertigungskosten führt. Zum Schutz vor mechanischer Beschädigung ist eine massive Ausführung erforderlich. Der damit erhöhte Materialaufwand bedeutet ebenfalls ein Ansteigen der Kosten. Weiterhin weist der bekannte Schalter einen komplizierten Aufbau und eine an Einzelteilen aufwendige Zusammenstellung auf. Die Anschlußkontakte sind in zwei Ebenen angeordnet. Hierfür sind getrennte Stanzteile erforderlich, die einzeln eingesetzt werden müssen. Damit die Anschlußstecker in beide Ebenen reichen, müssen diese unterschiedlich lang ausgeführt sein, wodurch sich die Teileanzahl vergrößert, was die Möglichkeit von Montagefehlern erhöht. Wie die Praxis gezeigt hat, gelingt es bei dem bekannten Schalter nicht, das Schalterinnere ausreichend vor Umwelteinflüssen zu schützen.

Des weiteren zeigt die EP 0 661 481 A2, die den nächstliegenden Stand der Technik bildet, einen Drehschalter mit einem Getriebe, insbesondere einem Automatikgetriebe, eines Kraftfahrzeuges, der ein Befestigungselement und ein Verstellorgan aufweist, und mit einem Anschlußkontakte tragenden Gehäuse sowie einem darin drehbaren, die Anschlußkontakte beaufschlagenden Schaltglied versehen ist. Der Drehschalter ist im Innenraum des Getriebes angeordnet, wobei ihm ein getriebefestes Rastsystem zugeordnet ist. Zur Realisierung des Befestigungselementes weist die Getriebewelle in ihrem Endbereich umfangsseitig gegenüberliegende Abflachungen auf, auf die eine korrespondierende Buchse mit angeformtem Schaltglied geschoben wird. Die Buchse ist in einer von dem Gehäuse gebildeten Nabe gelagert und gegen das Gehäuse abgedichtet. Das Gehäuse setzt sich aus einem Deckel und einem Sockel zusammen, wobei der Deckel unmittelbar auf dem Sockel befestigt ist.

Ferner ist aus der DE 44 19 794 A1 ein Drehschalter, insbesondere Getriebeschalter bekannt, der in einem aus einem Sokkel und einem Deckel bestehenden, mit Anschlußkontakten versehenen Gehäuse in zwei parallelen Ebenen konzentrisch zueinander verlaufende Festkontakte aufnimmt, denen eine Kontaktbrücke zugeordnet ist. Die Festkontakte jeder Ebene bestehen aus mindestens einem Stanzgitter pro Ebene, das in einen Kontaktträger eingespritzt ist. Die Kontakträger bilden mittels angeformter Abstandsstege einen Kontaktraum, in dem ein konzentrisch gelagertes Schaltglied über federbelastet gehalterte Kontaktbrücken gleitet. Der Sockel und der Deckel des Gehäuses sind miteinander induktionsverschweißt, auch die anderen äußeren Bereiche des Drehschalters sind abgedichtet.

Es ist Aufgabe der Erfindung, einen Drehschalter der eingangs genannten Art zu schaffen, der vor nicht berechenbaren Umgebungseinflüssen geschützt, preiswert in der Herstellung ist und eine sichere Kontaktgebung gewährleistet.

Erfindungsgemäß wird die Aufgabe dadurch gelöst, der Sockel einen umlaufenden Vorsprung aufweist, der in eine entsprechende, am Deckel eingelassene Nut eintaucht, wobei ein der Dicke des Wulstes der Buchse angepaßter Freiraum vorhanden ist, der den Wulst mit Spiel aufnimmt.

Diese Maßnahme ermöglicht einen einwandfreien Sitz zwischen Sockel und Deckel, wobei die Verbindung nicht dicht ist. Es ist von Vorteil, wenn die Kontakte mit dem im Getriebe vorhandenen Öl benetzt werden. Dadurch wird eine höhere Lebensdauer der Kontakte erreicht.

Um eine gute Führung des Drehschalters auf der Getriebewelle zu erzielen überragt die Buchse eine axiale Außenwand des Deckels.

Nach einer vorteilhaften Ausgestaltung der Erfindung ist das Befestigungselement durch eine in der Buchse des Schaltgliedes vorhandene Mitnahmebohrung sowie eine in der Getriebewelle vorhandene Stiftbohrung realisiert, in die ein Stift eingesetzt ist. Somit ist die Befestigung des Drehschalters einfach und ohne großen technischen Aufwand kostengünstig durchführbar. Die notwendigen Formelemente werden in die bereits vorhandenen Elemente integriert bzw. an diese angesetzt.

Vorzugsweise ist das Gehäuse kreissegmentförmig ausgebildet. Der sich aus dieser Ausbildung ergebende Vorteil ist darin zu sehen, daß das Gehäuse in radialer Richtung eine geschlossene Form mit günstigen eine Ausdehnungseigenschaften besitzt.

Nach einer vorteilhaften Weiterbildung der Erfindung ist das Verstellorgan eine am Gehäuse angeordnete Gabel, die das Rastsystem überragt und in die ein von einem Wählhebel des Getriebes beeinflußter Mitnahmebolzen eingreift, wobei der Mitnahmebolzen federnd in einer Rastkulisse des Rastsystems einliegt. Auf diese Weise zentriert sich der Mitnahmebolzen und somit der Drehschalter in der Rastposition. Um diese Rastposition zu erhalten und den Drehschalter zu fixieren, ist lediglich der federnde Mitnahmebolzen erforderlich. Diese Verringerung der Teileanzahl bewirkt ferner eine Verkleinerung der Toleranz und somit eine Erhöhung der Qualität, wodurch weniger Justageaufwand erforderlich ist.

Der Drehschalter soll einen kompakten Aufbau besitzen und dabei so wenig wie möglich Einzelteile aufweisen. Vorzugsweise umfaßt deshalb das Schaltglied einen vom Wulst abgehenden Kontaktträger, an dem eine Kontaktfeder befestigt ist. Der kompakte Aufbau ist durch die unmittelbare Befestigung des Kontaktträgers am Wulst gegeben. Die Zusammenbindung dieser Funktionskomponenten zum Schaltglied bewirkt die Verringerung der Teileanzahl. Das Schaltglied ist als Spritzgußteil herstellbar und muß lediglich mit der Kontaktfeder bestückt werden.

Um eine leichte Anpassung des Drehschalters an ein verändertes Schaltbild zu gewährleisten, ist weiterhin bevorzugt vorgesehen, daß die am Kontaktträger des Schaltgliedes befestigte Kontaktfeder ein Stanzgitter ist. Bei dem Stanzgitter werden die Einzelfedern über schmale Stanzstege verbunden und je nach gewünschtem Schaltbild durchtrennt.

Bei einer Weiterbildung der Erfindung ist in dem Sockel des Gehäuses ein die Anschlußkontakte darstellendes Stanzgitter eingespritzt, das auf der der am Schaltglied angeordneten Kontaktfeder zugewandten Seite offenliegt, wobei an den Anschlußkontakten Kontaktstecker angeformt sind, die in einem am Sockel angespritzten Steckergehäuse enden. Somit ergibt sich eine wesentliche Verringerung der Anzahl der zu montierenden Einzelteile. Außerdem ist durch das einstückige Anformen der Kontaktstecker an den Anschlußkontakten eine sichere elektrische Verbindung gewährleistet.

Die Kontaktfeder muß vor unsachgemäßer Beanspruchung geschützt werden. Dies gilt besonders für deren freies Ende, auf das keine Stauchbeansprung eingeleitet werden darf. Um dies zu erreichen, besitzt bevorzugt der Sockel den Weg des Schaltgliedes begrenzende Anschläge.

Der Zusammenbau und der Anschluß des Drehschalters soll bei der Herstellung der Einzelteile bereits vorbereitend berücksichtigt werden. Zweckmäßigerweise sind daher der Sockel und der Deckel über Verbindungselemente miteinander verbunden, und am Steckergehäuse sind eine Raste und eine Gehäusecodierung angeformt.

Die seitlich auf das Gehäuse einwirkenden Querkräfte, die auch beim Zusammenwirken des Rastsystemes entstehen können, sollen abgefangen werden, damit die Buchse des Schaltgliedes nicht im Gehäuse verklemmt. Bevorzugt ist dazu an einer axialen Außenwand des Sockels und/oder Deckels ein Stützsteg angeformt.

Bei einer vorteilhaften Ausführungsform besteht der Sockel, der Deckel und/oder das Schaltglied aus einem hitzesstabilisierten Kunststoff. Dadurch ist zum einen die wirtschaftliche Großserienfertigung mit entsprechenden Werkzeugen gewährleistet, und zum anderen kann der Drehschalter im Temperaturbereich des Getriebes problemlos eingesetzt werden.

Der der Erfindung zugrundeliegende Gedanke wird in der nachfolgenden Beschreibung anhand eines Asuführungsbeispieles, das in der Zeichnung dargestellt ist, näher erläutert. Es zeigt:

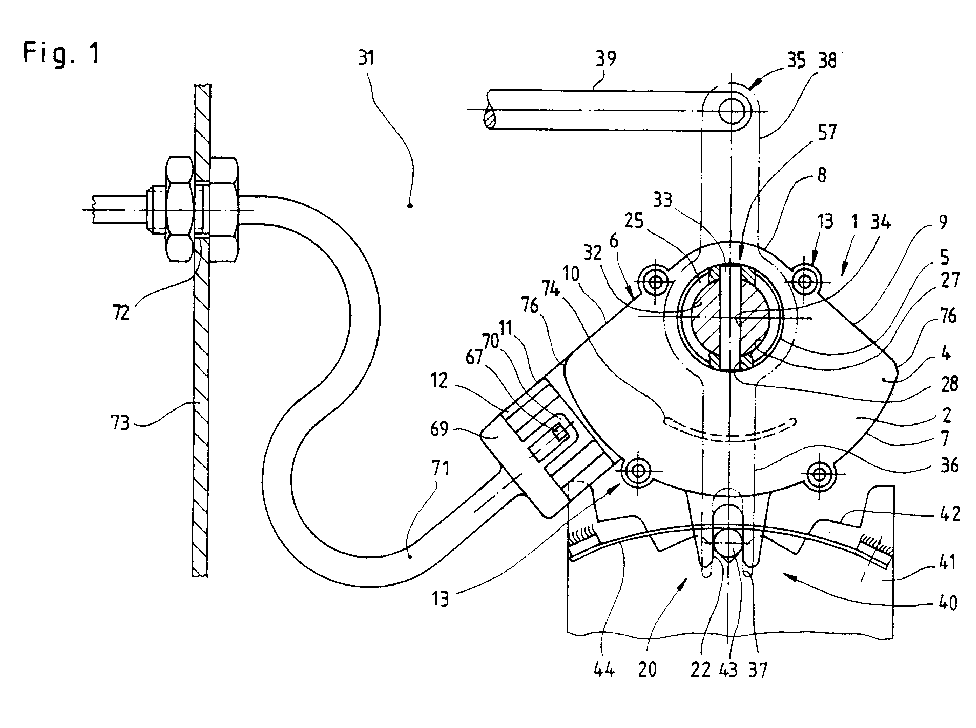

- Fig. 1: eine Ansicht auf einen in einem Getriebe montierten erfindungsgemäßen Drehschalter,
- Fig. 2: eine vergrößerte Ansicht auf den Drehschalter nach Fig. 1 mit ausgebrochenem Deckel,
- Fig. 3: einen Schnitt durch den Drehschalter gemäß Fig. 2 in Richtung der Pfeile III-III,

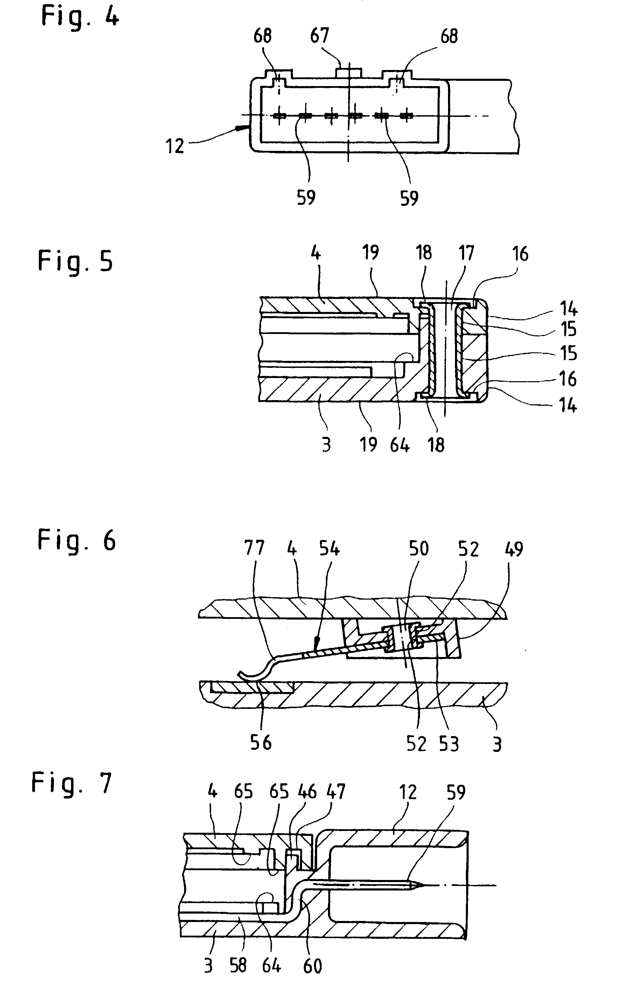

- Fig. 4: eine Teilansicht auf den Drehschalter gemäß Fig. 2 in Richtung des Pfeiles IV, gedreht gezeichnet,
- Fig. 5: einen vergrößerten Teilschnitt durch den Drehschalter gemäß Fig. 2 in Richtung der Pfeile V-V, jedoch gedreht gezeichnet,
- Fig. 6: einen vergrößerten Teilschnitt durch den Drehschalter gemäß Fig. 2 in Richtung der Pfeile VI-VI und
- Fig. 7: einen vergrößerten Teilschnitt durch den Drehschalter gemäß Fig. 2 in Richtung des Pfeiles VII, jedoch gedreht gezeichnet.

Der Drehschalter 1 besitzt ein kreissegmentförmiges im Schnitt im wesentlichen rechteckförmiges Gehäuse 2, das aus einem Sockel 3 und einem den Sockel 3 verschließenden Deckel 4 besteht. Konzentrisch ist im Gehäuse 2 eine Nabe 5 angeordnet. Die Schalterperipherie 6 umfaßt ein Kreisbogenstück 7 mit großem Radius, ein Kreisbogenstück 8 mit kleinem Radius und zwei Geraden 9 und 10, die unter einem Winkel von ca. 110 Grad tangential am Kreisbogenstück 8 anschließen. Die Gerade 10 verläuft über das Kreisbogenstück 7 hinaus und bildet die Außenkante 11 eines Steckergehäuses 12, das sich in Richtung des Kreibogenstückes 7 erstreckt. Der Übergang zwischen dem Kreisbogenstück 7 und den Geraden 9, 10 ist jeweils mit einer Verundung 76 durchgeführt. An der Schalterperipherie 6 sind vier Verbindungselemente 13 vorgesehen, mit denen der Deckel 4 am Sockel 3 befestigt ist. Jedes Verbindungselement 13 besteht aus einem Auge 14, einer Bohrung 15, einer Vertiefung 16, die sowohl im Sockel 4 als auch im Deckel 4 vorhanden ist, und aus einer Rohrniet 17. Der Rohrniet 17 durchragt die Bohrungen 15, und in jeder Vertiefung 16 liegt ein Kopf 18 des Rohrnietes 17 ein, wodurch die Köpfe 18 nicht über die axialen Außenwände 19 des Gehäuses 2 hinausragen. Der Sockel 3 des Gehäuses 2 weist in einer axialen Ausrichtung eine Sokkelöffnung 75 auf, die nach dem Einsetzen eines Schaltgliedes 26 durch den Deckel 4 verschlossen wird.

Am Sockel 3 des Gehäuses 2 befindet sich annähernd mittig am Kreisbogenstück 7 ein Verstellorgan 20 in Form einer Gabel 21. Die Gabel 21 umfaßt eine einseitg offenen, im Bereich des Kreisbogenstückes 7 verrundeten Schlitz 22, der beidseitig von Laschen 23 begrenzt ist. Von einer Seite sind die Laschen 23 mit Materialersparniskammern 24 ausgenommen. Eine in die Nabe 5 eingesetzte Buchse 25 ragt auf der Seite des Deckels 4 aus dem Gehäuses 2 hervor, die Teil des Schaltgliedes 26 ist. Die Buchse 25 weist eine koaxiale Wellenbohrung 27 auf, die die Buchse 25 durchragt. In dem über den Deckel 4 vorstehenden Teil der Buchse 25 ist quer eine Mitnahmebohrung 28 eingearbeitet, die die Buchse 25 durchdringt. Von der Außenwand 19 des Sockels 3 ist eine Stufenbohrung 29 eingelassen, mit der niveaugleich die Buchse 25 endet. Zum leichteren Montieren des Drehschalters 1 sind an der Buchse 25 mehrere Fasen 30 angearbeitet.

Der Drehschalter 1 ist im Innenraum 31 eines automatischen Getriebes auf einer Getriebewelle 32 festgelegt. Die Getriebewelle 32 ist durch die Wellenbohrung 27 geschoben, und der Drehschalter 1 ist über ein Befestigungselement 57, das die Mitnahmebohrung 28 ist, auf der Getriebewelle 32 festgesetzt. Dabei erfolgt eine verdrehfeste Verbindung der Buchse 25 mit der Getriebewelle 32 durch einen Stift 33, der in die Mitnahmebohrung 28 und eine in der Getriebewelle 32 vorhandene Stiftbohrung 34 eingesetzt ist. Das Gehäuse 2 ist sonach weiterhin drehbar um die Buchse 25. Eine Verstellschwinge 35 (dargestellt mit einer Strich-Zweipunktlinie) ist drehbar auf der Getriebewelle 32 gelagert, die einerseits einen Mitnahmefinger 36, dessen Mitnahmeschlitz 37 die gleiche Breite wie der Schlitz 22 des Verstellorganes 20 besitzt, und andererseits gegenüber dem Mitnahmefinger 36 einen Verstellhebel 38 aufweist, an dem ein von einem Wählhebel abgehendes Gestänge 39 drehbar befestigt ist.

Dem Drehschalter 1 ist ein getriebefestes Rastsystem 40 zugeordnet. Das Rastsystem 40 besteht aus einem am Getriebegehäuse angeschweißtem Rastblech 41, in das, dem Drehschalter 1 zugewandt, eine Rastkulisse 42 eingelassen ist, einem federnd in der Rastkulisse 42 gelagerten Mitnahmebolzen 43 und einer einseitig befestigten, auf der anderen Seite sich abstützenden, am Rastblech 41 angeordneten Blattfeder 44. Die Gabel 21 des Gehäuses 2 überragt das Rastsystem 40 bzw. die Rastkulisse 42. Der Mitnahmebolzen 43 liegt sowohl in der Gabel 21 des Drehschalters 1 als auch im Mitnahmeschlitz 37 des Mitnahmefingers 36 ein und bewirkt beim Betätigen des Wählhebels ein Verschwenken des Gehäuses 2 um die Achse der Getriebewelle 32. Dabei gleitet der Mitnahmebolzen 43 in der Rastkulisse 42 in die nächste Rastvertiefung 45, wodurch eine definierte Schaltstellung erreicht ist.

Um einen einwandfreien und verdrehsicheren Sitz des Deckels 4 auf dem Sockel 5 zu erhalten, besitzt der Sockel 3 einen umlaufenden Vorsprung 46, der in eine am Deckel 4 eingelassene Nut 47 eintaucht. Dieses System muß nicht dicht sein, da die äußeren auf den Drehschalter 1 einwirkenden Bedingungen und Einflüsse jetzt bekannt sind, und der Schalteraufbau so ausgeführt ist, daß diese Einflüsse nicht zu einem Schalterausfall führen. Bevor jedoch der Sockel 3 mit dem Deckel 4 verschlossen wird, muß das komplett bestückte Schaltglied 26 eingesetzt werden. Der in den Sockel 3 eintauchende Teil der Buchse 25 sitzt dabei mit geringem Spiel in der Nabe 5 des Sockels 3. Die Tiefe des Eintauchens ist durch einen umlaufenden Wulst 48 der Buchse 25 begrenzt. Die Dicke des Wulstes 48 ist geringfügig dünner als die Höhe des Freiraumes, der sich ergibt, wenn am Sockel 3 der Deckel 4 montiert ist. Dadurch hat der Wulst 48 in axialer Richtung ein geringes Spiel, wodurch das Schaltglied 26 leicht gedreht werden kann.

Das Schaltglied 26 besteht aus mehreren Funktionselementen. So sind die Buchse 25 mit dem umlaufenden Wulst 48 einstückig ausgeführt, und am umlaufenden Wulst 48 befindet sich ebenfalls damit einstückig ein Kontaktträger 49. Über Rohrniete 50 ist eine Kontaktfeder 51 am Kontaktträger 49 befestigt. Die Rohrniete 50 erstrecken sich durch gegenüberliegende Bohrungen 52 im Kontaktträger 49 und in der Kontaktfeder 51. Eine weitere Veringerung der Teileanzahl läßt sich erreichen, wenn anstatt der Rohrniete 50 Nietdome am Kontaktträger 49 angespritzt sind, und die Kontaktfeder 51 mit diesen Nietdomen am Schaltglied 26 befestigt wird. Die Kontaktfeder 51 setzt sich aus einer Basisplatte 53, in der die Bohrungen 52 eingelassen sind, und aus sechs davon abgehenden Einzelfedern 54 zusammen. Die Einzelfedern 54 sind in einem spitzen Winkel auf Anschlußkontakte 55 zulaufend ausgebildet und federn somit. An dem der Basisplatte 53 gegenüberliegenden Ende weisen die Einzelfedern 54 zum einen eine Gleitrundung 56 auf, und zum anderen sind sie mit einem Federschlitz 77 versehen. An unterschiedliche Schaltbilder ist der Drehschalter 1 anpaßbar, wenn die Kontaktfeder 51 als Stanzgitter hergestellt ist (nicht dargestellt). Die Einzelfedern 54 sind dann in der Basisplatte 53 über schmale Stanzstege verbunden, die nach dem Befestigen der Kontaktfeder 51 den Anforderungen des Schaltbildes entsprechend durchtrennt werden. Dabei müssen selbstverständlich alle zu einem Strompfad gehörenden Einzelfedern 54 am Kontakträger 49 festgelegt sein.

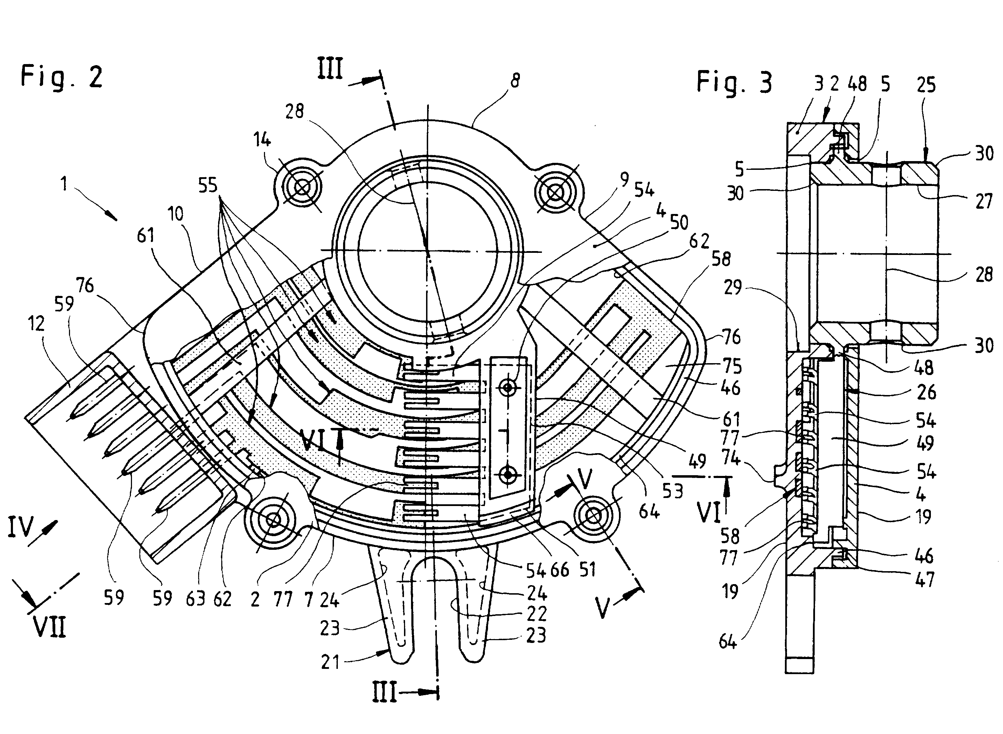

Die Anschlußkontakte 55 sind als Stanzgitter 58 hergestellt und im Sockel 3 eingespritzt. Das Stanzgitter 58 liegt dabei auf der dem Schaltglied 26 zugewandten Seite offen an der Oberfläche, so daß die darüber hinweggleitenden Einzelfedern 54 mit den Anschlußkontakten 55 in elektrische Verbindung treten. Die sichtbaren Oberflächen des Stanzgitters 58 sind in der Fig. 2 mit einem Punktraster markiert. Die Anschlußkontakte 55 sind bis in den Bereich des am Sockel 3 angespritzten Steckergehäuses 12 weitergeführt und sind dort als Kontaktstecker 59 geformt. Damit die Kontaktstecker 59 vom nicht dargestellten Gegenkontakt aufgenommen werden können, besitzt das Stanzgitter 58 beim Übergang in das Steckergehäuse 12 einen Z-Sprung 60. Außerhalb des von den Einzelfedern 54 bestrichenen Bereiches ist das Stanzgitter 58 mit Materialbrücken 61 überspritzt, mit denen es niveaugleich an der Oberfläche fixiert wird.

Der Schwenkbereich des Schaltgliedes 26 ist durch am Sockel 3 angebrachte Anschläge 62 begrenzt. Die Anschläge 62 sind zum einen durch die Innenseite der Geraden 9 des Sockels 3 und zum anderen durch einen an der Innenseite des Kreisbogenstükkes 7 hochstehenden Bolzen 63 realisiert. Über den gesammten Schwenkbereich des Kontaktträgers 49 verläuft ebenfalls an der Innenseite des Kreisbogenstückes 7 eine Rampe 64. Über die Rampe 64 und Deckelrampen 65 wird das freie Kontaktträgerende 66 geführt, wodurch stets der gleiche Abstand zu den Anschlußkontakten 55 sichergestellt ist.

Das am Sockel 3 angeordnete Steckergehäuse 12 ist mit einer Raste 67 und eine Gehäusecodierung 68 versehen. Mit der Gehäusecodierung 68 wird verhindert, daß ein falscher Leiterbaumstecker 69 auf das Steckergehäuse 12 aufgesteckt werden kann. Über die Raste 67 klipst eine am Leiterbaumstecker 69 vorhandene Klipslasche 70 und verhindert das selbsttätige Lösen des Leiterbaumsteckers 69. Der am Leiterbaumstecker 69 angeschlossene Leiterbaum 71 wird durch ein Wandloch 72 in der Getriebewand 73 nach außen geführt, wobei die Durchführung durch das Wandloch 72 mit einer Dichtverschraubung 73 realisiert ist. Koaxial befindet sich auf der axialen Außenwand 19 des Sockels 3 ein Stützsteg 74, der den Drehschalter 1 seitlich abstützt, wobei durch die geringe Breite die Reibungsfläche so gering wie möglich gehalten ist.

Der Drehschalter 1 wird in einem Bereich eingesetzt, in dem erhöhte Temperaturen vorkommen. Daher sind der Sockel 3, der Deckel 4 und das Schaltglied 26 aus einem hitzestabilsiertem Kunststoff auf spritztechnischem Weg in einem Werkzeug hergestellt.

## Patentansprüche

1. Drehschalter mit einem Getriebe, insbesondere Automatikgetriebe, eines Kraftfahrzeuges, der im Innenraum (31) des Getriebes über eine an einem Anschlußkontakte (55) beaufschlagenden Schaltglied (26) angeformte Buchse (25) mit einem umfangsseitigem Wulst (48) sowie einem zugeordneten Befestigungselement (57) auf der Getriebewelle (32) gelagert ist, und der ein an einem aus einem Sockel (3) und einem Deckel (4) bestehendes Gehäuse (2), das die Anschlußkontakte (55) trägt, angeordnetes Verstellorgan (20) aufweist, das mit einem getriebefesten Rastsystem (40) zusammenwirkt, **dadurch gekennzeichnet**, daß der Sockel (3) einen umlaufenden Vorsprung (46) aufweist, der in eine entsprechende, am Deckel (4) eingelassene Nut (47) eintaucht, wobei ein der Dicke des Wulstes (48) der Buchse (25) angepaßter Freiraum vorhanden ist, der den Wulst (48) mit Spiel aufnimmt.

2. Drehschalter nach Anspruch 1, **dadurch gekennzeichnet**, daß die Buchse (25) eine axiale Außenwand (19) des Deckels (4) überragt.

3. Drehschalter nach Anspruch 1 und 2, **dadurch gekennzeichnet**, daß das Befestigungselement (57) durch eine in der Buchse (25) des Schaltgliedes (26) vorhandene Mitnahmebohrung (28) sowie eine in der Getriebewelle (32) vorhandene Stiftbohrung (34) realisiert ist, in die ein Stift (33) eingesetzt ist.

4. Drehschalter nach Anspruch 1, **dadurch gekennzeichnet**, daß das Gehäuse (2) kreissegmentförmig ausgebildet ist.

5. Drehschalter nach Anspruch 1, **dadurch gekennzeichnet**, daß das Verstellorgan (20) eine am Gehäuse (2) angeordnete Gabel (21) ist, die das Rastsystem (40) überragt und in die ein von einem Wählhebel des Getriebes beeinflußter Mitnahmebolzen (43) eingreift, wobei der Mitnahmebolzen (43) federnd in einer Rastkulisse (42) des Rastsystems (40) einliegt.

6. Drehschalter nach einem der Ansprüche 1 bis 3, **dadurch gekennzeichnet**, daß das Schaltglied (26) einen vom Wulst (48) abgehenden Kontaktträger (49) umfaßt, an dem eine Kontaktfeder (51) befestigt ist.

7. Drehschalter nach Anspruch 6, **dadurch gekennzeichnet**, daß die am Kontaktträger (49) des Schaltgliedes (26) befestigte Kontaktfeder (51) ein Stanzgitter ist.

8. Drehschalter nach einem der Ansprüche 1 bis 7, **dadurch gekennzeichnet**, daß in dem Sokkel (3) des Gehäuses (2) ein die Anschlußkontakte (55) darstellendes Stanzgitter (58) eingespritzt ist, das auf der am Schaltglied (26) angeordneten Kontaktfeder (51) zugewandten Seite offenliegt, wobei an den Anschlußkontakten (55) Kontaktstecker (59) angeformt sind, die in einem am Sockel (3) angespritzten Steckergehäuse (12) enden.

9. Drehschalter nach einem der Ansprüche 1 bis 8, **dadurch gekennzeichnet**, daß der Scckel (3) den Weg des Schaltgliedes (26) begrenzende Anschläge (62) besitzt.

10. Drehschalter nach einem der Ansprüche 1 bis 9, **dadurch gekennzeichnet**,daß der Sockel (3) und der Deckel (4) über Verbindungselemente (13) miteinander verbunden sind, und am Steckergehäuse (12) eine Raste (67) und eine Gehäusecodierung (68) angeformt sind.

11. Drehschalter nach einem der Ansprüche 1 bis 10, **dadurch gekennzeichnet**, daß an einer axialen Außenwand (19) des Sockels (3) und/oder des Deckels (4) ein Stützsteg (74) angeformt ist.

12. Drehschalter nach einem der Ansprüche 1 bis 11, **dadurch gekennzeichnet**, daß der Sockel (3), der Deckel (4) und/oder das Schaltglied (26) aus einem hitzesstabilisierten Kunststoff bestehen.

## Claims

1. Rotary switch for a gearbox, more especially an automatic gearbox, of an automotive vehicle, which switch is mountable on the gearshaft (32) in the interior (31) of the gearbox via a bush (25), which is integrally moulded on a switching member (26), which acts on connection contacts (55), said bush having a bead (48) at the peripheral edge and an associated securing means (57), and which switch has an adjusting means (20), which is disposed on a housing (2), which comprises a base (3) and a cover (4) and is provided with the connection contacts (55), said adjusting means co-operating with a locking system (40) secured to the gearbox, characterised in that the base (3) has a circumferential projection member (46), which extends into a corresponding groove (47) recessed in the cover (4), a gap being provided, which is adapted to the thickness of the bead (48) of the bush (25) and accommodates the bead (48) with some clearance.

2. Rotary switch according to claim 1, characterised in that the bush (25) protrudes beyond an axial external wall (19) of the cover (4).

3. Rotary switch according to claims 1 and 2, characterised in that the securing means (57) is formed by an engaging bore (28), which is provided in the bush (25) of the switching member (26), and by a pin bore (34), which is provided in the gearshaft (32), and a pin (33) being inserted in said pin bore.

4. Rotary switch according to claim 1, characterised in that the housing (2) is in the form of a segment of a circle.

5. Rotary switch according to claim 1, characterised in that the adjusting means (20) is a fork (21), which is disposed on the housing (2), said fork protruding beyond the locking system (40) and engaging in the engaging bolts (43), which are influenced by a selector lever of the gearbox, the engaging bolt (43) lying resiliently in a locking slide (42) of the locking system (40).

6. Rotary switch according to one of claims 1 to 3, characterised in that the switching member (26) includes a contact carrier (49), which departs from the bead (48) and on which a contact spring (51) is mounted.

7. Rotary switch according to claim 6, characterised in that the contact spring (51), which is mounted on the contact carrier (49) of the switching member (26), is a pressed screen.

8. Rotary switch according to one of claims 1 to 7, characterised in that a pressed screen (58), which represents the connection contacts (55), is injected in the base (3) of the housing (2) and lies open on the side facing the contact spring (51) disposed on the switching member (26), contact plugs (59) being integrally moulded on the connection contacts (55) and terminating in a plug housing (12) injection-moulded on the base (3).

9. Rotary switch according to one of claims 1 to 8, characterised in that the base (3) has stop members (62), which define the path of the switching member (26).

10. Rotary switch according to one of claims 1 to 9, characterised in that the base (3) and the cover (4) are interconnected via connecting elements (13), and a locking means (67) and a housing coding (68) are integrally moulded on the plug housing (12).

11. Rotary switch according to one of claims 1 to 10, characterised in that a supporting rib (74) is integrally moulded on an axial external wall (19) of the base (3) and/or of the cover (4).

12. Rotary switch according to one of claims 1 to 11, characterised in that the base (3), the cover (4) and/or the switching member (26) are/is formed from a thermally stabilised plastics material.

## Revendications

1. Commutateur rotatif avec une boîte de vitesses, en particulier une boîte de vitesses automatique, d'un véhicule automobile, qui est monté sur l'arbre de boîte de vitesses (32) dans l'espace intérieur (31) de la boîte de vitesses par l'intermédiaire d'une douille (25) surmoulée sur un organe de commutation (26) sollicitant des contacts de connexion (55) et pourvue d'un bourrelet périphérique (48) ainsi que d'un élément de fixation associé (57) et qui comporte un organe de réglage (20), lequel est disposé sur un boîtier consistant en un socle (3) et en un couvercle (4) et portant les contacts de connexion (55) et coopère avec un système de crantage (40) solidaire de la boîte de vitesses, caractérisé en ce que le socle (3) comporte une saillie périphérique (46) qui s'insère dans une gorge correspondante (47) ménagée dans le couvercle (4), un espace libre adapté à l'épaisseur du bourrelet (48) de la douille (25) étant créé et recevant le bourrelet (48) avec jeu.

2. Commutateur rotatif selon la revendication 1, caractérisé en ce que la douille (25) dépasse d'une paroi extérieure axiale (19) du couvercle (4).

3. Commutateur rotatif selon les revendications 1 et 2, caractérisé en ce que l'élément de fixation (57) est constitué par un trou d'entraînement (28) ménagé dans la douille (25) de l'organe de commutation (26) ainsi que par un trou de goupille (34) qui est ménagé dans l'arbre de boîte de vitesses (32) et dans lequel est logée une goupille (33).

4. Commutateur rotatif selon la revendication 1, caractérisé en ce que le boîtier (2) est conformé en segment de cercle.

5. Commutateur rotatif selon la revendication 1, caractérisé en ce que l'organe de réglage (20) est une fourche (21) qui est disposée sur le boîtier (2), qui recouvre le système de crantage (40) et dans laquelle pénètre un axe d'entraînement (43) soumis à l'action d'un levier sélecteur de la boîte de vitesses, l'axe d'entraînement (43) étant logé de manière élastique dans une coulisse de crantage (42) du système de crantage (40).

6. Commutateur rotatif selon l'une des revendications 1 à 3, caractérisé en ce que l'organe de commutation (26) comprend un support de contact (49) qui part du bourrelet (48) et auquel un ressort de contact (51) est fixé.

7. Commutateur rotatif selon la revendication 6, caractérisé en ce que le ressort de contact (51) fixé au support de contact (49) de l'organe de commutation (26) est une grille estampée.

8. Commutateur rotatif selon l'une des revendications 1 à 7, caractérisé en ce que dans le socle (3) du boîtier (2) est injectée une grille estampée (58) qui constitue les contacts de connexion (55) et qui est apparente sur le côté tourné vers un ressort de contact (51) disposé sur l'organe de commutation (26), des fiches de contact (59) qui aboutissent dans un boîtier de fiches (12) moulé par injection sur le socle (3) étant formées sur les contacts de connexion (55).

9. Commutateur rotatif selon l'une des revendications 1 à 8, caractérisé en ce que le socle (3) possède des butées (62) limitant la course de l'organe de commutation (26) .

10. Commutateur rotatif selon l'une des revendications 1 à 9, caractérisé en ce que le socle (3) et le couvercle (4) sont reliés entre eux par des éléments de liaison (13), et un cran (67) et un moyen de codage de boîtier (68) sont formés sur le boîtier de fiches (12).

11. Commutateur rotatif selon l'une des revendications 1 à 11, caractérisé en ce qu'une barrette d'appui (74) est formée sur une paroi extérieure axiale (19) du socle (3) et/ou du couvercle (4).

12. Commutateur rotatif selon l'une des revendications 1 à 11, caractérisé en ce que le socle (3), le couvercle (4) et/ou l'organe de commutation (26) sont réalisés en une matière plastique thermostable.
